# EUROPEAN PATENT APPLICATION

(11) **EP 1 550 948 A1**
(43) Date of publication of application: **06.07.2005**
(21) Application number: 03751375.1
(22) Date of filing: 08.10.2003
(51) Int. Cl.: G06F 9/06

(54) **PROGRAM UPDATING METHOD AND TERMINAL DEVICE**

(30) Priority: 08.10.2002 JP 2002294499; 06.10.2003 JP 2003347561
(71) Applicant: MATSUSHITA ELECTRIC INDUSTRIAL CO., LTD., Kadoma-shi, Osaka 571-8501 (JP)
(72) Inventor: MATSUMOTO, Taisuke, Yokohama-shi, Kanagawa 220-0004 (JP); WATANABE, Yasuhiko, Kawasaki-shi, Kanagawa 211-0041 (JP)
(74) Representative: Grünecker, Kinkeldey, Stockmair & Schwanhäusser Anwaltssozietät
(86) International application number: PCT/JP2003/012862
(87) International publication number: WO 2004/034250

(57) **Abstract**

In the present invention, in updating a program stored in rewritable nonvolatile memory such as Flash ROM, a program portion in a block in the nonvolatile memory is expanded in RAM which includes a portion needing an update of the program stored, and only the portion needing the update is instructed from the outside and updated among the expanded program portion. Then, the block in the nonvolatile memory is erased, and the program portion updated in the RAM is recorded again in the erased block in the nonvolatile memory.

## Description

### Technical Field

The present invention relates to a method of updating a program stored in rewritable nonvolatile memory such as Flash ROM in a terminal apparatus and to the terminal apparatus.

### Background Art

Conventionally, a terminal apparatus stores control software (program) to instruct the operation of a CPU to control the terminal apparatus in rewritable nonvolatile memory such as Flash ROM.

In such a terminal apparatus, a method is proposed of updating control software when a bug is found in the control software. For example, such a method is disclosed in JP2001-154838 (pages 3-5, and FIG.3).

In the method disclosed in JP2001-154838, first generated is new control software with a bug corrected. Then, the rewritable nonvolatile memory with the bug recorded is once erased, and the new control software is recorded in the memory. The control software is thus updated.

In the method of updating control software where rewritable nonvolatile memory such as Flash ROM is once erased and new control software is recorded thereon, under constraints of the nonvolatile memory such as Flash ROM, the memory is divided into a plurality of blocks, and only on a divided black basis, old control software is deleted and new control software is recorded.

Therefore, even when only 1 byte needs to be corrected, it is necessary to delete the entire 16 Kbytes or 64 Kbytes if the block of the nonvolatile memory is 16Kbytes or 64Kbytes, and transfer new control software with a bug corrected of 16 Kbytes or 64Kbyres from the outside of the apparatus to record in the nonvolatile memory, respectively.

Therefore, in updating control software of a terminal apparatus, a data amount to transfer from the outside of the apparatus is increased, and there arises a problem that the operation time is increased including the time required for data transfer.

### Disclosure of Invention

It is an object of the present invention to reduce the operation time of a terminal apparatus required for an update of a program recorded in the apparatus.

In the present invention, in updating a program that is stored in rewritable nonvolatile memory such as Flash ROM, a program portion in a block of the nonvolatile memory is expanded in RAM which contains a portion needing an update in the stored program, and only the portion needing the update in the expanded program portion is updated according to instructions from the outside. Then, the block in the nonvolatile memory is erased, and the program portion updated in the RAM is recorded again in the erased block in the nonvolatile memory.

By thus expanding a program portion including a portion needing an update in RAM, it is possible to update only the portion needing the update in the programportion. By this means, it is required to instruct only a portion needing an update, and the need is eliminated of instructing update information on all the program portions. In other words, since it is possible to reduce rewrite instructions transferred from the outside of the apparatus, it is possible to achieve reduction in update operation time of a program including the time required for data transmission.

### Brief Description of Drawings

FIG.1 is a function block diagram of a terminal apparatus in a first embodiment of the present invention;
FIG.2 is a view showing an example of a memory map in the terminal apparatus;
FIG.3 is a processing flowchart in the first embodiment;
FIG.4 is a view showing an example of rewrite instructions in the first embodiment;
FIG.5 is a view showing another example of the rewrite instructions in the first embodiment;
FIG.6 is a view showing an example of rewrite instructions in a second embodiment of the present invention;
FIG.7 is a processing flowchart in the second embodiment;
FIG.8 is a view showing an example of rewrite instructions in a third embodiment of the present invention;
FIG.9 is a processing flowchart in the third embodiment;
FIG.10 is a view showing another example of the rewrite instructions in the third embodiment;
FIG.11 is a view showing still another example of the rewrite instructions in the third embodiment;
FIG.12 is a view showing an example of rewrite instructions in a fourth embodiment of the present invention;
FIG.13 is a processing flowchart in the fourth embodiment;
FIG.14A is a view showing a module structure of software before being corrected in a fifth embodiment of the present invention;
FIG. 14B is a view showing a module structure of the software after being corrected in the fifth embodiment;
FIG.15 is a view showing an example of rewrite instructions in the fifth embodiment;
FIG.16 is a processing flowchart in the fifth embodiment;
FIG.17 is a view showing another example of the rewrite instructions in the fifth embodiment;
FIG.18 is a view showing still another example of the rewrite instructions in the fifth embodiment;
FIG.19 is a view showing a module structure of software after being expanded in RAM in the fifth embodiment;
FIG.20A is a view showing a module structure of software before being corrected in a sixth embodiment of the present invention;
FIG.20B is a view showing a module structure of the software after being corrected in the sixth embodiment;
FIG.21A is a view showing data of software in Flash ROM before being corrected in the sixth embodiment;
FIG.21B is a view showing data of the software in the Flash ROM after being corrected in the sixth embodiment;
FIG.22 is a view showing commands that a control CPU uses in the sixth embodiment;
FIG.23 is a view showing an example of rewrite instructions in the sixth embodiment;
FIG.24 is a processing flowchart in the sixth embodiment;
FIG.25 is a view showing a record of shifts in the sixth embodiment;
FIG.26 is a view showing part of data of software in RAM before address rewrite is instructed in the sixth embodiment;
FIG.27 is a view showing part of data of the software in the RAM after address rewrite is instructed in the sixth embodiment; and
FIG.28 is another view showing part of data of the software in the RAM after address rewrite is instructed in the sixth embodiment.

### Best Mode for Carrying Out the Invention

Embodiments of the present invention will be described below with reference to accompanying drawings.

### (First embodiment)

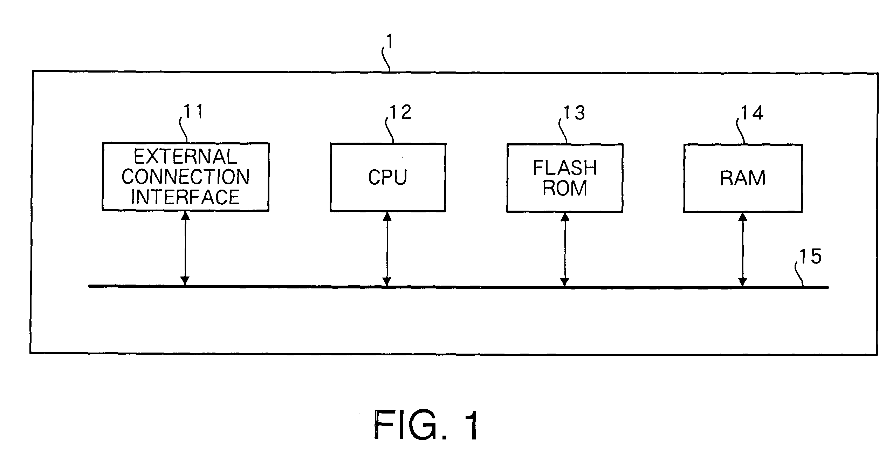

FIG.1 shows an example of a block diagram of a terminal apparatus in the first embodiment of the present invention. In FIG.1, "1" denotes a terminal apparatus.

Terminal apparatus 1 has external connection interface 11 that transmits/receives a signal to/from the outside, control CPU 12 that controls terminal apparatus 1, Flash ROM 13 that is rewritable nonvolatile memory, RAM 14, and data bus 15 where each functional block is connected via data bus 15.

Considered as the external interface 11 are a cable wired connection interface and wireless connection interface. Further, as the external interface 11, a memory card interface may be used. In this case, control CPU 12 reads out various information from a memory card inserted into the memory card interface.

In addition, when the external interface 11 is a wired connection interface or wireless connection interface and is connected to networks, it is possible to input data using HTTP, FTP, TFTP and other transmission protocols. Further, also when information is input through the external interface such as wired connection interface, wireless connection interface or memory card interface, the input information is recorded in RAM 14 or Flash ROM 13 through control CPU 12. In addition, in this embodiment, data is recorded via control CPU 12, and when DMA transfer is allowed, data may be copied using DMA transfer.

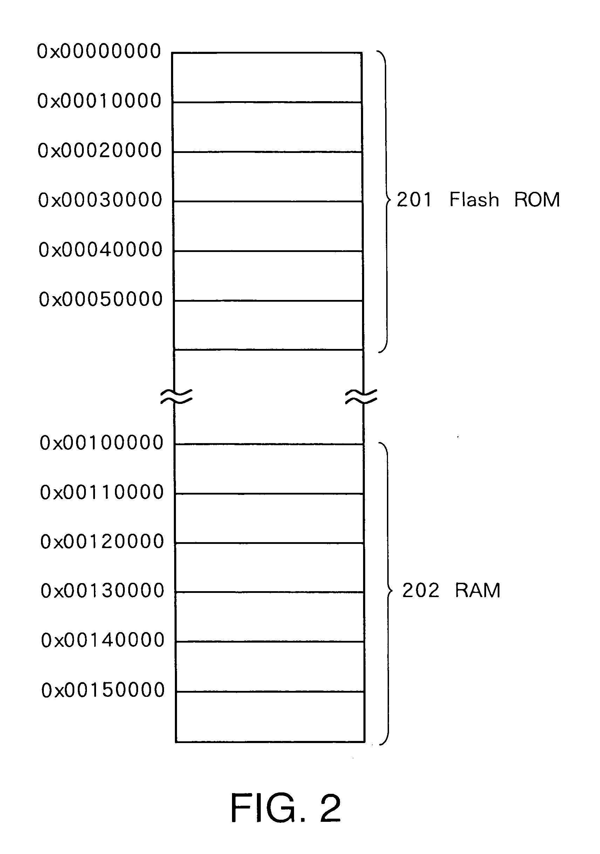

FIG.2 shows an example of a memory map in terminal apparatus 1.

As shown in FIG.2, memory area 201 of Flash ROM 13 connected to data bus 15 has address 00000000 (hereinafter, represented as 0x00000000) in hexadecimal notation to 0x0005FFFF in memory space controlled by control CPU 12. Further, it is assumed that memory area 202 of RAM 14 has 0x00100000 to 0x0015FFFF, and that an erase unit of Flash ROM 13 is 64 Kbytes, i.e. 0x00000000~0x0000FFFF, 0x00010000~0x0001FFFF...

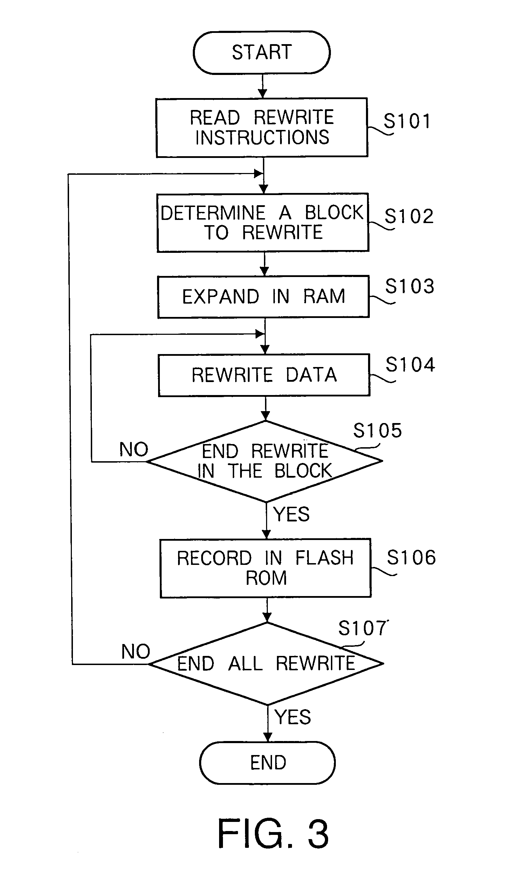

The operation of terminal apparatus 1 configured as described above will be described below with reference to a flowchart as shown in FIG.3.

In step S101, control CPU 12 of terminal apparatus 1 reads rewrite instructions into an arbitrary area (herein, assuming the area starting with 0x00100000 in FIG.2) in RAM 14 through external connection interface 11 from an external apparatus not shown in FIG.1.

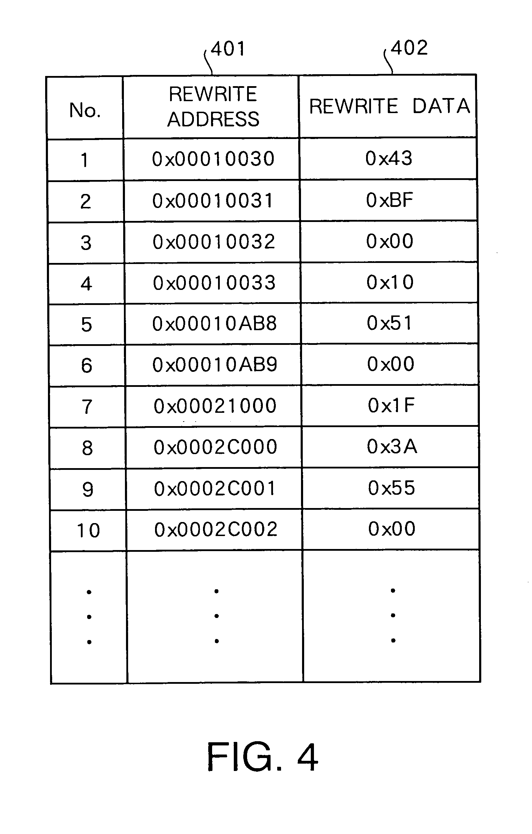

It is herein assumed that addresses and data to rewrite is as shown in FIG.4 in the control software stored in Flash ROM 13.

Further, by instructing rewrite portions of the control software using addresses as shown in FIG.4, it is not necessary to instruct a rewrite portion using actual data, and it is thereby possible to reduce a data amount of rewrite instructions and reduce the time for program update.

Then, in step S102, control CPU 12 determines a rewrite block in Flash ROM 13. For example, control CPU 12 checks rewrite addresses in FIG.4, and judges the rewrite instructions of No.1 to No.6 designate rewrite in a block of 0x00010000 to 0x0001FFFF in Flash ROM 13.

In step S103, control CPU 12 expands data in the block to rewrite determined in step S102 in any area (herein, assuming 0x00110000 to 0x0011FFFF in FIG.2) in RAM 14 except the area into which the rewrite instructions are read in step 101.

Further, in step S104, control CPU 12 updates data in address 0x00110030 in the RAM, where data in address 0x00010030 instructed by rewrite instruction No.1 in FIG.4 is expanded, to 0x43.

In step S105, control CPU 12 judges whether all the rewrite instructions on the rewrite block determined in step S102 have been processed. In this case, since instructions No.2 to No.6 are left, control CPU 12 shifts to the processing of step S104, and in the same way as in the foregoing, updates the control software expanded in the RAM according to rewrite instructions No.2 to No. 6.

After finishing the processing of rewrite instruction No.6, control CPU 12 is capable of determining in step S105 that the rewrite instructions on the rewrite block have been all processed, and shifts to the processing of step S106.

Next, in step S106, control CPU 12 erases the block of 0x00010000 to 0x0001FFFF in Flash ROM 13. Then, control CPU 12 records the updated control software stored in the area of from 0x00110000 to 0x0011FFFF in RAM 14 in the erased block in Flash ROM 13.

In step S107, control CPU 12 judges whether all the read rewrite instructions have been processed. In this case, since rewrite instruction No.7 is left, control CPU 12 shifts to the processing of step S102.

Then, in step S102, control CPU 12 checks rewrite addresses of instructions of No.7 and subsequent numbers in FIG.4, and judges the rewrite instructions of No.7 to No.19 designate rewrite in a block of 0x00020000 to 0x0002FFFF in Flash ROM 13.

In step S103, control CPU 12 expands data in the block in any area (herein, assuming 0x00110000 to 0x0011FFFF in FIG.2) in RAM 14 except the area into which the rewrite instructions are read. Further, in step S104, control CPU 12 updates data in address 0x00110000 in RAM 14, where data in address 0x00021000 instructed by rewrite instruction No.7 in FIG.4 is expanded, to 0x1F.

Thereafter, control CPU 12 updates the control software expanded in the RAM according to rewrite instructions No.8 to No.10 in the same way as in the foregoing. In step S106, control CPU 12 deletes the block in Flash ROM 13. Then, control CPU 12 records the updated control software stored in the area of from 0x00110000 to 0x0011FFFF in RAM 14 in the deleted block in Flash ROM 13.

The processing as described above is repeated until it is judged in step S107 that processing of rewrite instructions read in terminal apparatus 1 has been all finished.

As described above, according to the first embodiment, by expanding a program portion including a portion needing an update in RAM 14, it is possible to update only the portion needing the update in the program portion. It is thus required to instruct only a portion needing an update, while eliminating the need of instructing update information on entire the program portion. In other words, it is possible to reduce rewrite instructions transferred from the outside to terminal apparatus 1. As a result, it is possible to achieve reduction in the update operation time of the control program stored in Flash ROM 13 including data transfer time.

Further, it is possible to delete Flash ROM 13 and write updated data in Flash ROM 13 after completing the update of a program portion of the control program in RAM 14. By this means, for example, there is obtained a method of saving in RAM 14 only portions that do not need changes in the control program in Flash RAM 13, deleting Flash ROM 13, and downloading an update program portion to write in Flash ROM 13. In this method, it is possible to avoid situations such that not only the write of the update program fails, but also the original program stored in Flash ROM 13 is lost when communications are disconnected during the time update program information is written in Flash ROM 13. In other words, even when communications are disconnected during the time the update program information is written, program portions before being updated are left in Flash ROM 13, and therefore, can be restored.

Further, according to the first embodiment, a rewrite instruction is provided from the outside using the external interface 11, whereby it is not necessary to remove Flash ROM 13 to update the program, and it is possible to achieve a program update with the update operation time reduced.

In addition, the memory space as shown in FIG.2 may be changed corresponding to a type or architecture of control CPU 12, Flash ROM 13 and/or RAM 14 or a data amount to provide in terminal apparatus 1.

Further, while Flash ROM 13 is used in this embodiment, memory such as EEPROM may be used as long as the memory is rewritable nonvolatile memory.

Furthermore, an update unit of control software is 64 Kbytes in this embodiment, but does not need to be 64 Kbytes, and is determined depending on an erase block size depending on a device type of nonvolatile memory such as Flash ROM 13. Moreover, while this embodiment describes 1 byte as the number of rewrite bytes, rewrite data dons not need to be 1 byte, and for example, a data amount such as 2 bytes and 4 bytes capable of being designated by any address designation method may be rewritten at the same time.

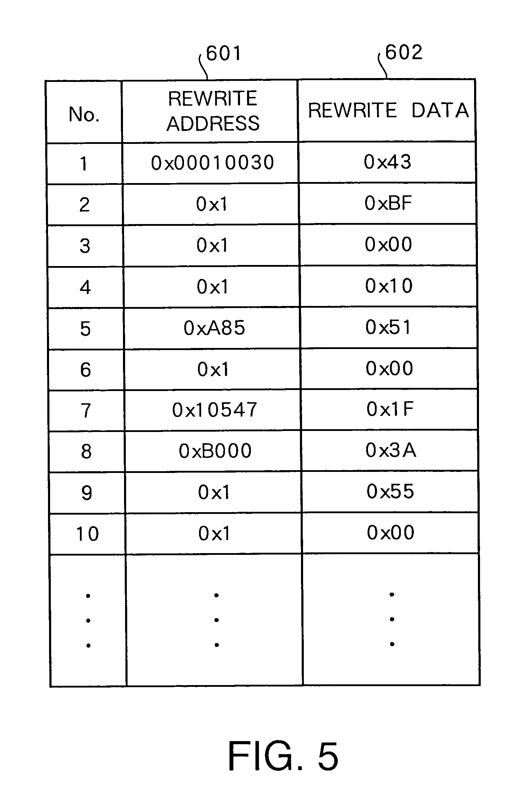

In FIG.4, addresses targeted for rewrite in Flash ROM 13 are designated by absolute addresses. However, as shown in FIG.5, it may be possible to designate only a first address by an absolute address, and with respect to subsequent addresses, designate using a relative value from the address used immediately before. For example, in an example as shown in FIG.5, a rewrite address designated by rewrite instruction No.2 indicates an address staying 0x1 behind the rewrite address designated by instruction No.1.

In this way, it is possible to instruct rewrite by a relative address whose data amount is smaller than that of the absolute address, and to reduce a data amount of rewrite instructions.

### (Second embodiment)

A terminal apparatus according to the second embodiment of the present invention will be described below.

An example of a functional block of the terminal apparatus and an example of a memory map according to the second embodiment of the present invention are the same as in the terminal apparatus in the first embodiment and thus the same as those as shown in FIGs.1 and 2, respectively.

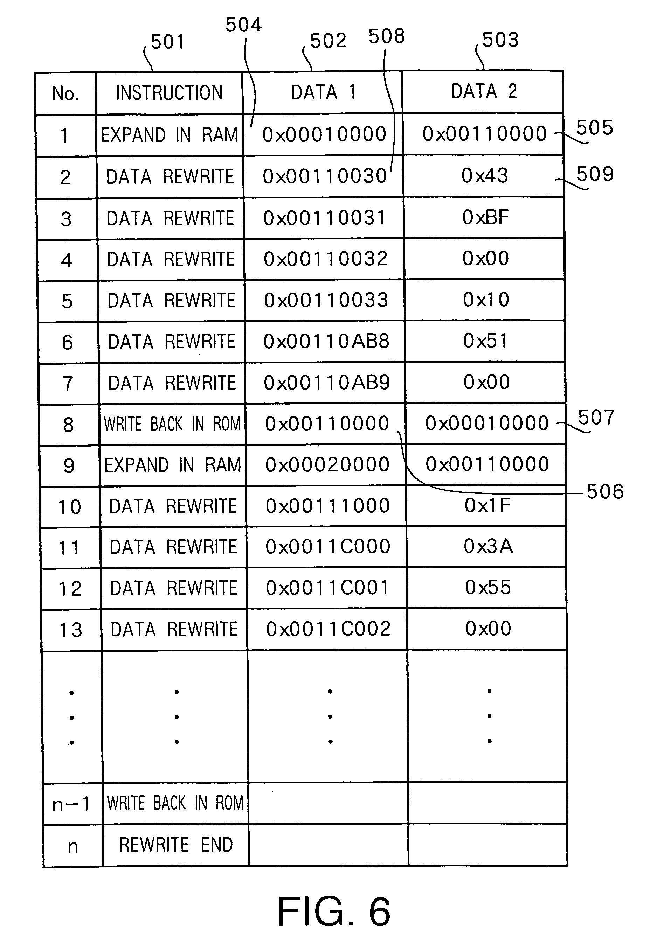

In the first embodiment, rewrite instructions are comprised of a combination of rewrite target address 401 in the nonvolatile memory and rewrite data 402 as shown in FIG. 4. In the second embodiment, rewrite instructions are comprised of a combination of rewrite instruction command 501 and data 501 and 502 to execute the command as shown in FIG.6. Also by this means, it is possible to obtain the same effects as in the first embodiment.

For example, rewrite instruction No.1 in FIG.6 is an instruction for expanding in RAM 14. When receiving rewrite instruction No.1, control CPU 12 expands the program from Flash ROM 13 to RAM 14 usingdata 1 asexpansion resource address 504 and data 2 as expansion destination address 505.

Further, rewrite instruction No.8 in FIG.6 is an instruction for writing back in Flash ROM 13. Control CPU 12 having received rewrite instruction No.8 deletes a block in Flash ROM 13 starting with data 2 following the rewrite instruction, and then stores the program in RAM 14 in Flash ROM 13 using data 1 as expansion source address 506 and data 2 as record destination address 507.

Rewrite instructions No.2 to No.7 and No.10 to No. 13 are instructions for data rewrite. When receiving data rewrite instructions, control CPU 12 rewrites data in the RAM using data 1 as rewrite target address 508 and data 2 as actual rewrite data 509.

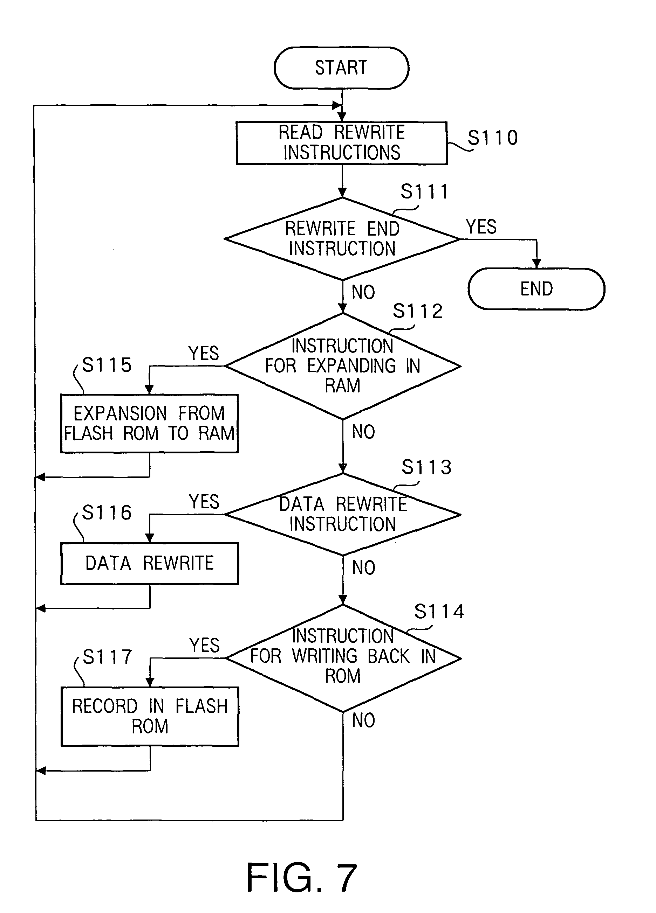

The operation when rewrite instructions as shown in FIG. 6 are given will be described below with reference to a flowchart as shown in FIG.7.

First, in step S110, when instructions as shown in FIG.6 are provided as rewrite instructions of a program stored in Flash ROM 13, control CPU 12 reads and stores rewrite instruction No.1 as shown in FIG.6 in any area in RAM 14 through external connection interface 11.

In step 111, control CPU 12 checks whether the read instruction No.1 is a rewrite end instruction. Since instruction No.1 is not the rewrite end instruction, control CPU 12 shifts to processing of step S112.

In step S112, control CPU 12 checks whether instruction No.1 is an instruction for expanding in RAM 14. Since instruction No.1 is the instruction for expanding in RAM 14, control CPU 12 shifts to processing of step S115.

In step S115, control CPU 12 expands data in the block starting with 0x00010000 in Flash ROM 13, i.e. 0x00010000 to 0x0001FFFF in the second embodiment, in 0x00110000 to 0x0011FFFF in RAM 14, according to data following instructions. Then, control CPU 12 shifts to processing of step S110.

Next, in step S110, control CPU 12 reads instruction No.2. Control CPU 12 checks the instruction content of read instruction No.2 in steps S111 and S112 as in instruction No.1. However, instruction No.2 does not agree with branch conditions of steps S111 and S112. Accordingly, control CPU 12 shifts to processing of step S113.

In step S113, control CPU 12 judges that instruction No.2 is a data rewrite instruction, and therefore, shifts to processing of step S116.

In step 116, control CPU 12 rewrites data stored in address 0x00110030 to 0x43, according to data following the instruction.

Then, control CPU 12 repeats the same processing as in the foregoing until instruction No.7, and reads instruction No.8 in step S110. Control CPU 12 checks the instruction content in steps S111 to S113 in the same way as in the processing described above, and then, shifts to the processing of step S114.

In step S114, control CPU 112 judges that instruction No.8 is an instruction for writing back in Flash ROM 13, and shifts to processing of step S117.

In step S117, according to data following the instruction, control CPU 12 shifts to processing for recording the program expanded in RAM 14 in the block 0x00010000 to 0x0001FFFF. First, control CPU 12 once deletes the block 0x00010000 to 0x0001FFFF in the ROM 13. Then, control CPU 12 records the contents of the block 0x00110000 to 0x0011FFFF in RAM 14 in the block 0x00010000 to 0x0001FFFF in Flash ROM 13.

Then, control CPU 12 executes the aforementioned processing for all the rewrite instructions provided as in FIG.6.

As described above, according to the second embodiment, it is possible to read only data needing an update into terminal apparatus 1 among control software stored in Flash ROM 13 in terminal apparatus 1. It is thereby possible to achieve reduction in update time of software recorded in Flash ROM 13 in terminal apparatus 1.

In addition, in the second embodiment, rewrite instructions as exemplified in FIG.6 are provided via the external interface 11 as shown in FIG.1, and further, it may be possible to provide instruction contents sequentially for execution of the rewrite processing. Furthermore, it may be possible to collectively provide instructions to be stored in RAM 14 in terminal apparatus 1 so that the rewrite processing is executed based on the stored instructions.

Moreover, in the aforementioned description, each processing for checking the content of the read instruction is performed in the order of steps S111, S112, S113 and S114 in FIG.7, but it is possible to obtain the same effectiveness even if the order is changed optionally.

### (Third embodiment)

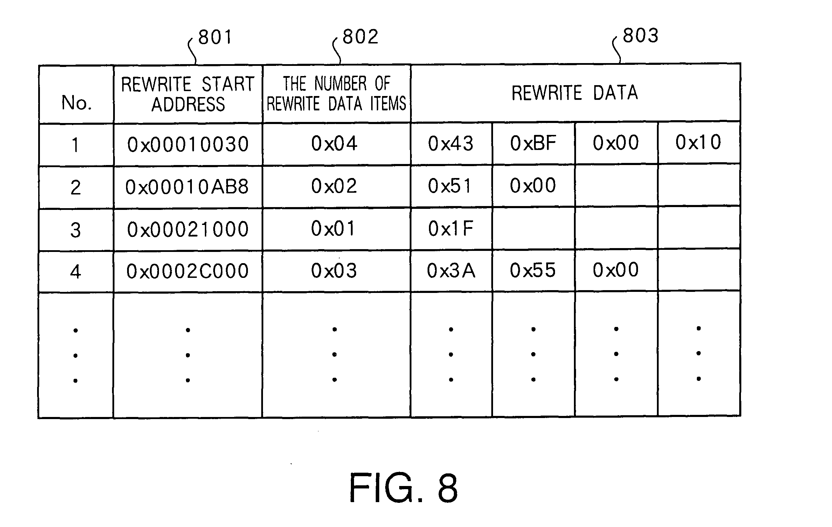

In the first embodiment, rewrite instructions are comprised of a combination of rewrite target address 401 in Flash ROM 13 that is nonvolatile memory and rewrite data 402 as shown in FIG.4. In the third embodiment, rewrite instructions are comprised of a combination of rewrite start address 801, the number of rewrite data items 802, and actual rewrite data 803 corresponding to the number of rewrite data items 802 as shown in FIG.8. By this means, it is possible to obtain the same effects as in the first embodiment.

In addition, an example of a functional block of the terminal apparatus and an example of a memory map according to the third embodiment of the present invention are the same as in the first embodiment as shown in FIGs.1 and 2, respectively.

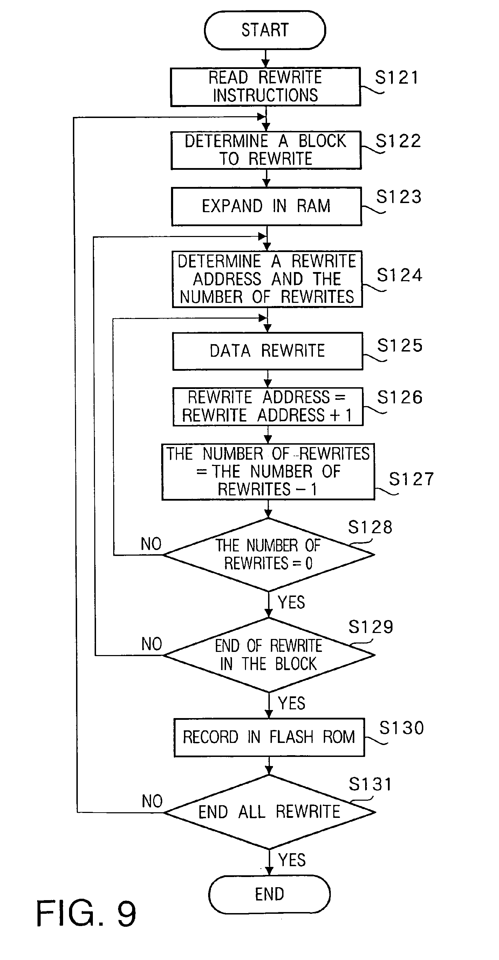

The operation of terminal apparatus 1 when rewrite instructions as shown in FIG.8 are provided will be described below with reference to a flowchart as shown in FIG.9.

In step S121, when instructions as shown in FIG.8 are provided to terminal apparatus 1 as rewrite instructions on a program stored in Flash ROM 13, control CPU 12 reads the rewrite instructions as shown in FIG.8 into an arbitrary area (herein, assuming the area starting with 0x00100000 in FIG.2) in RAM 14 through external connection interface 11.

In step S122, control CPU 12 checks rewrite start addresses in FIG.8, and judges that rewrite instructions No.1 and No.2 instruct rewrite in a block 0x00010000 to 0x0001FFFF in Flash ROM 13.

Next, in step S123, control CPU 12 expands data in the block judged in step S122 in any area (herein, assuming 0x00110000 to 0x0011FFFF in FIG.2) except the area into which the rewrite instructions are read.

Further, in step S124, control CPU 12 determines that address 0x00110030 in RAM 14 where 0x00010030 in Flash ROM 13 is expanded is a rewrite start address, and that the number of rewrite data items is 0x04, based on rewrite instruction No.1 in FIG.8.

In step S125, control CPU 12 changes the content of the address 0x00110030 to 0x43 based on the rewrite data of instruction No.1 in FIG.8.

Next, in step S126, control CPU 12 increases the rewrite address by 1 to 0x00110031. In step S127, control CPU 12 decreases the number of rewrite data items by 1 to 0x03. In step S128, control CPU 12 checks whether the number of rewrite data items is 0, and when the number is not 0, shifts to the processing of step S125.

Then, control CPU 12 repeats the processing of steps S125 to S128 as described above until the number of rewrite data items becomes 0.

When the number of rewrite data items becomes 0, in step S129, control CPU 12 judges whether all the rewrite instructions on the rewrite block determined in step 122 have been processed. When all the rewrite instructions on the block are not processed, control CPU 12 shifts to the processing of step S124, and repeats the processing of steps S124 to S129 until all the rewrite instructions on the block have been processed.

Meanwhile, when all the rewrite instructions on the rewrite block have been processed, in step S130, control CPU 12 deletes the block determined in step S122 in Flash ROM 13. Then, control CPU 12 records the updated control software stored in the area of from 0x00110000 to 0x0011FFFF in RAM 14 in the deleted block in Flash ROM 13.

Next, in step S131, control CPU 12 judges whether all the processing for rewrite instructions as exemplified in FIG.8 is completed. When the processing is not completed, control CPU 12 shifts to the processing of step S122.

Then, control CPU 12 repeats the processing of steps S122 to S131 as described above until the processing for all the rewrite instructions is completed.

As described above, according to the third embodiment, it is possible to read only data needing an update into terminal apparatus 1 to update, among control software stored in Flash ROM 13 in terminal apparatus 1.

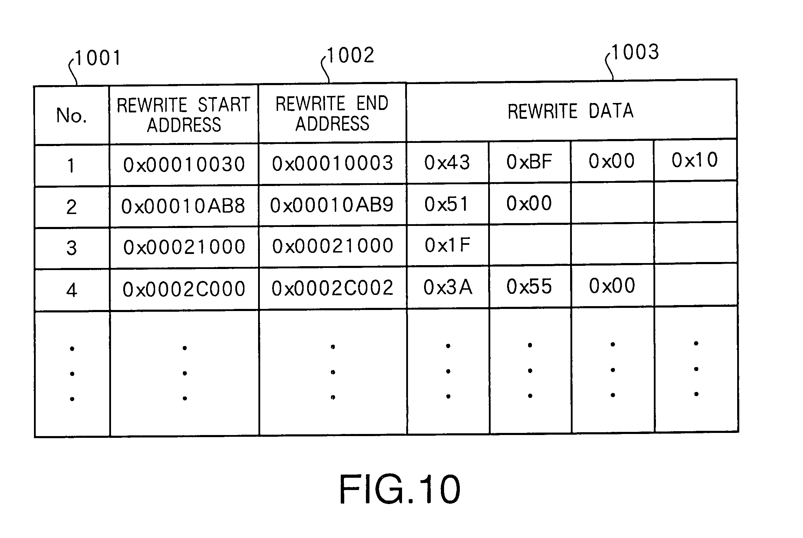

In the third embodiment, rewrite instructions are comprised of a combination of rewrite start address 801, the number of rewrite data items 802 and actual rewrite data 803 as shown in FIG.8. Further, rewrite instructions may be comprised of rewrite start address 1001, rewrite end address 1002, and actual rewrite data 1003 as shown in FIG.10. In this case, by comparing rewrite start address 0x00010030 with rewrite end address 0x00010033, for example, as shown in FIG.10, the number of rewrite data items is derived to 0x04. Thus, using rewrite instructions as shown in FIG.10, it is also possible to obtain the same effects as in the rewrite instructions as shown in FIG.8.

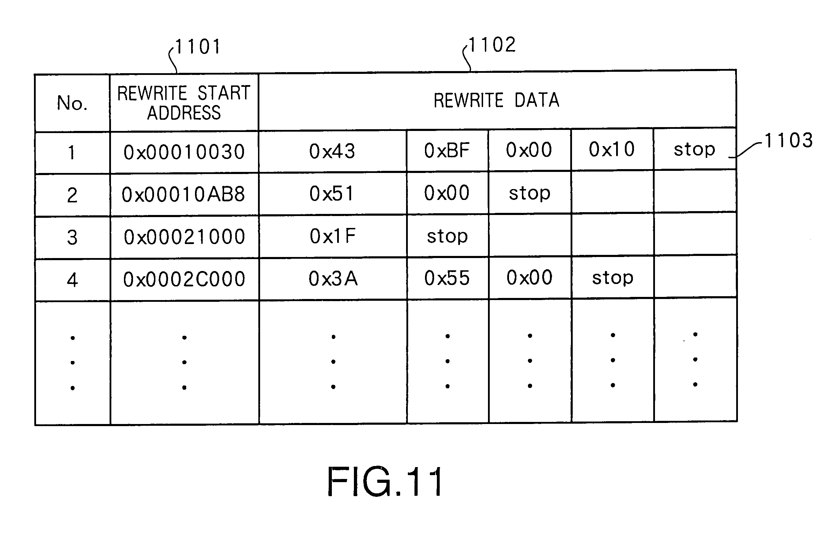

Thus, in the third embodiment, rewrite instructions are comprised of a combination of rewrite start address 801, the number of rewrite data items 802 and actual rewrite data 803 as shown in FIG.8. Further, rewrite instructions may be comprised of rewrite start address 1101, actual rewrite data 1102 and specific data indicative of rewrite stop 1103 as shown in FIG.11. In this case, for example, in rewrite instruction No.1 in FIG.11, data in address 0x00110030 in RAM 14, where the program at rewrite start address 0x00010030 is expanded, is updated to 0x43. Further, data at address 0x00110031 is updated to 0xBF, data at address 0x00110032 is updated to 0x00, and data at 0x00110033 is updated to 0x10.

Thus, since data following 0x10 is the specific data indicative of rewrite stop, it is possible to judge next data after the specific data as a next rewrite start address. In this way, by repeating the processing as described above, the rewrite instructions as shown in FIG.11 enable the same effects as in the rewrite instructions as shown in FIG.8 to be obtained.

Further, in the third embodiment, the rewrite address is increased by 1 in step S126, and then the number of rewrite data items is decreased by 1 in S127. However, the same effects are obtained by first decreasing the number of rewrite data items by 1, and then increasing the rewrite address by 1.

### (Fourth embodiment)

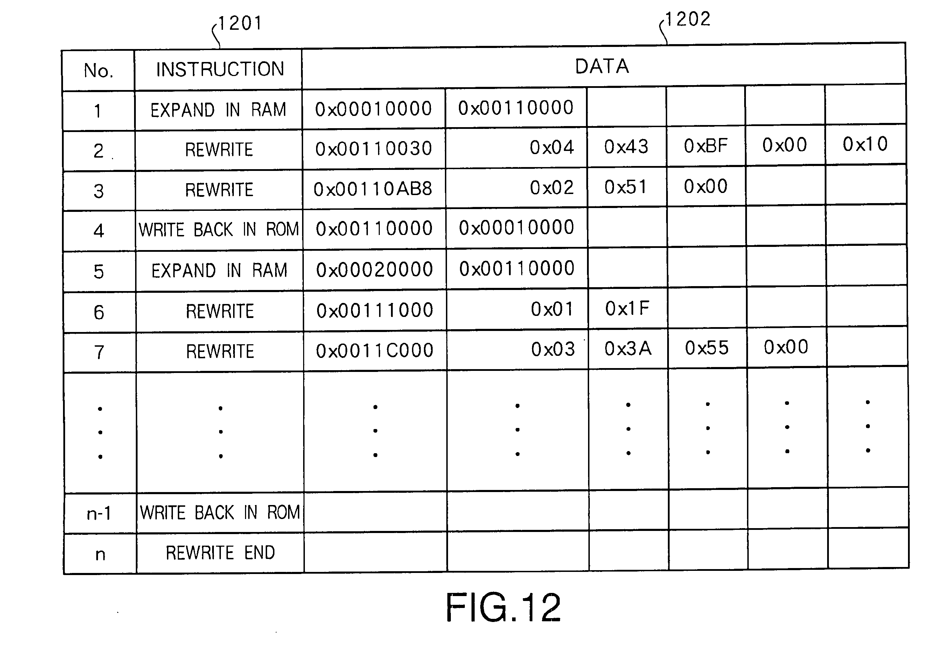

In the third embodiment, rewrite instructions are comprised of a combination of rewrite start address 801 in the nonvolatile memory, the number of rewrite data items 802 and actual rewrite data 803 as shown in FIG.8. In the fourth embodiment, instructions are comprised of a combination of instruction 1201 including rewrite instruction commands and data 1202 for executing the commands as shown in FIG.12. By this means, it is also possible to obtain the same effects as in the third embodiment.

In addition, an example of a functional block of the terminal apparatus and an example of a memory map according to the fourth embodiment of the present invention are the same as in the first embodiment as shown in FIGs.1 and 2, respectively.

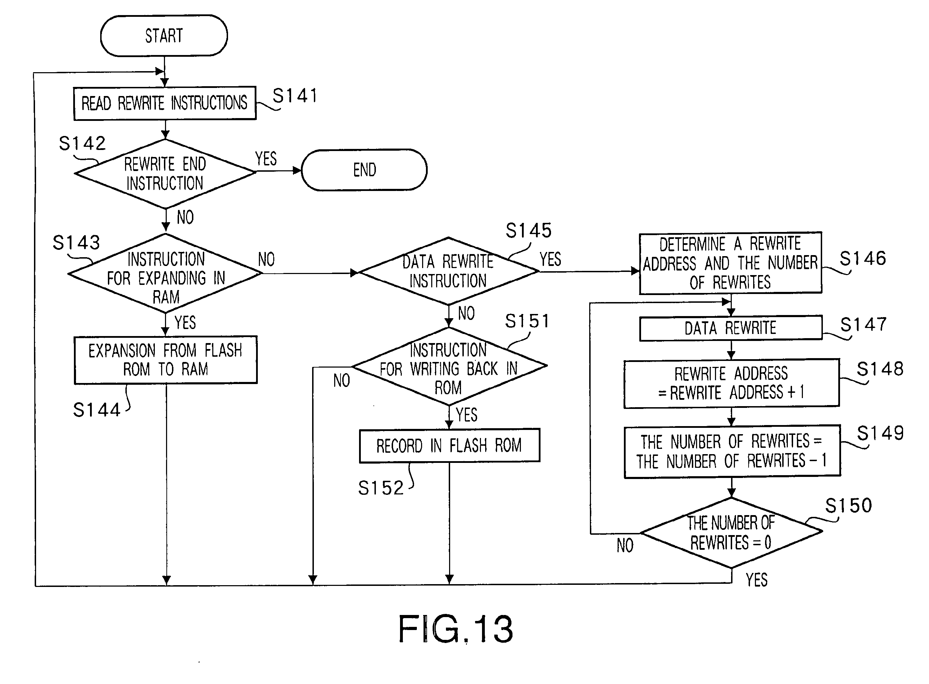

The operation when rewrite instructions as shown in FIG.12 are provided will be described below with reference to a flowchart as shown in FIG.13.

In addition, among the operation of rewrite instructions in FIG.12, expansion in the RAM and write back in the ROM is the same as in the second embodiment. Further, the rewrite indicates using successive actual data corresponding to the number of data items indicated by data following an address to write in the address indicated by data following an instruction.

In step S141, when instructions as shown in FIG.12 are provided as rewrite instructions on a program stored in Flash ROM 13, control CPU 12 reads instruction No.1.

Next, in step S142, control CPU 12 checks whether the read instruction is a rewrite end instruction. When the instruction is not the rewrite end instruction, control CPU 12 shifts to processing of step S143.

In step S143, control CPU 12 checks whether the read instruction is an instruction for expanding in RAM 14. When the instruction is the instruction for expanding in RAM 14, control CPU 12 shifts to processing of step S144, while shifting to processing of step S145 when the instruction is not the instruction for expanding in RAM 14.

In step S144, when the read instruction is instruction No.1 in FIG.12, the instruction is the instruction for expanding in RAM 14. Therefore, control CPU 12 expands data at addresses 0x00010000 to 0x0001FFFF in Flash ROM 13 in addresses 0x00110000 to 0x0011FFFF in RAM 14. Then, control CPU 12 shifts to processing of step S141.

When a read instruction is instruction No.2 in FIG. 12, control CPU 12 reads the instruction in step S141. Then, control CPU 12 shifts to processing of S145 via the processing of steps S142 to S143.

In step S145, control CPU 12 checks whether the read instruction is a data rewrite instruction. When the read instruction is the data rewrite instruction, control CPU 12 shifts to processing of step S146. Meanwhile, when the read instruction is not the data rewrite instruction, control CPU 12 shifts to processing of step S151.

Instruction No.2 in FIG.12 is the data rewrite instruction. Therefore, control CPU 12 shifts to processing of S146.

In step S146, control CPU 12 determines that address 0x00110030 in RAM 14 is a rewrite start address, and that the number of rewrite data items is 0x04, from rewrite instruction No.2 in FIG.12.

Next, in step S147, control CPU 12 changes the content of address 0x00110030 to 0x43 based on rewrite data of instruction No.2 in FIG.12. Then, control CPU 12 increases the rewrite address by 1 to 0x00110031 in step S148.

In step S149, control CPU 12 decreases the number of rewrite data items by 1 to 0x03.

In step S150, control CPU 12 checks whether the number of rewrite data items is 0, and when the number is not 0, shifts to the processing of step S147.

Then, control CPU 12 repeats the processing of steps S147 to S150 as described above until the number of rewrite data items becomes 0. When the number of rewrite data items becomes 0, control CPU 12 shifts to the processing of S141.

In the case of instruction No.4 in FIG.12, control CPU 12 reads the instruction in step S141. Then, control CPU 12 shifts to processing of S151 via the processing of steps S142, S143 and S145. Then, in step S151, control CPU 12 checks whether the read instruction is an instruction for writing back in Flash ROM 13, and when the instruction is the instruction for writing back in Flash ROM 13, shifts to processing of step S152, while shifting to the processing of S141 when the instruction is not the instruction for writing back in Flash ROM 13.

Instruction No.4 in FIG.12 is the instruction for writing back in Flash ROM 13. Accordingly, control CPU 12 shifts to the processing of step S152.

In step S152, control CPU 12 erases the block in Flash ROM 13 indicated by the read instruction for writing back in the ROM, i.e., 0x00010000 to 0x0001FFFF in the case of instruction No.4 exemplified in FIG.12. Next, control CPU 12 records the updated control software stored in 0x00110000 to 0x0011FFFF in RAM 14 in the erased block in Flash ROM 13. Then, control CPU 12 shifts to the processing of step S141.

Control CPU 12 repeats the aforementioned processing until an instruction read in step S141 is judged to be a rewrite end instruction in step S142.

As described above, according to the fourth embodiment, it is possible to read only data needing an update into terminal apparatus 1 among control software stored in Flash ROM 13 in terminal apparatus 1.

In addition, in the fourth embodiment, rewrite instructions as exemplified in FIG.12 are provided via the external interface 11 as shown in FIG.1, and further, it may be possible to provide instruction contents sequentially for execution of the rewrite processing. Furthermore, it may be possible to collectively provide instructions to be stored in RAM 14 in the terminal so that the rewrite processing is executed based on the stored instructions.

Moreover, the fourth embodiment describes the case where determination processing on the content of an instruction read in step S141 is executed in the order of steps S142, S143, S145 and S151, but it is possible to exchange the order of determination optionally.

Further, in the fourth embodiment, the rewrite address is increased by 1 in step S148, and then the number of rewrite data items is decreased by 1 in step S149. However, the same effects are obtained by first decreasing the number of rewrite data items by 1, and then increasing the rewrite address by 1.

### (Fifth embodiment)

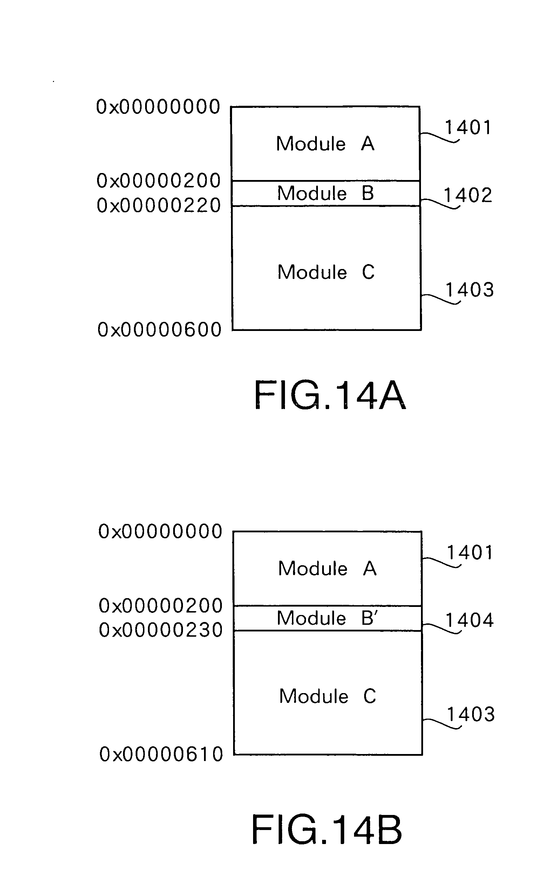

FIGs.14A and 14B show module structures of a program in the fifth embodiment of the present invention, and FIG. 14A shows a structure before a bug is corrected, while FIG.14B shows a structure after the bug is corrected.

In other words, the program as shown in FIG.14A is comprised of three modules, Module A1401, Module B1402, and Module C1403. In the program shown in FIG.14A, i.e. the program before being corrected, Module A is located at 0x00000000 to 0x000001FF, Module B is located at 0x00000200 to 0x0000021F, and Module C is located at 0x00000220 to 0x000005FF.

Further, in a program as shown in FIG. 14B, as a result of correction of the program as shown in FIG.14A, Module B1402 is changed, and is located at 0x00000200 to 0x0000022F as Module B'1404. Module A is not changed from that in FIG.14A. Module C is not changed in content, but moves in location to 0x00000230 to 0x0000060F.

An example of a functional block of terminal apparatus 1 and an example of a memory map in the fifth embodiment of the present invention are assumed to be the same as those in FIGs.1 and 2, respectively.

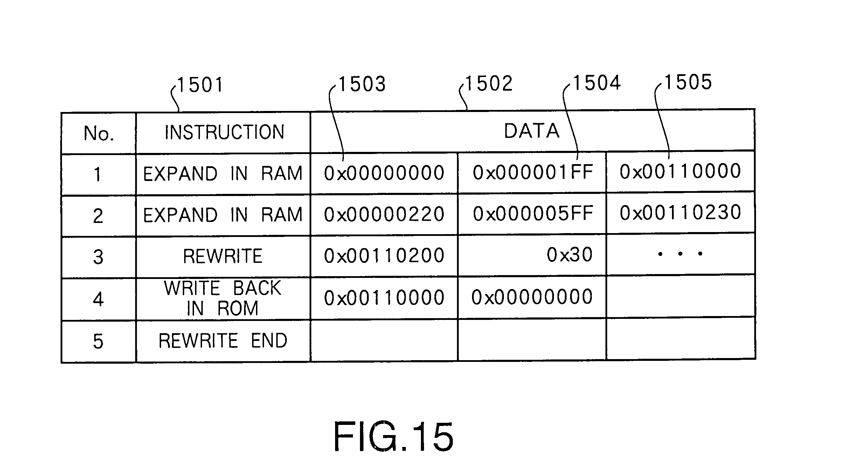

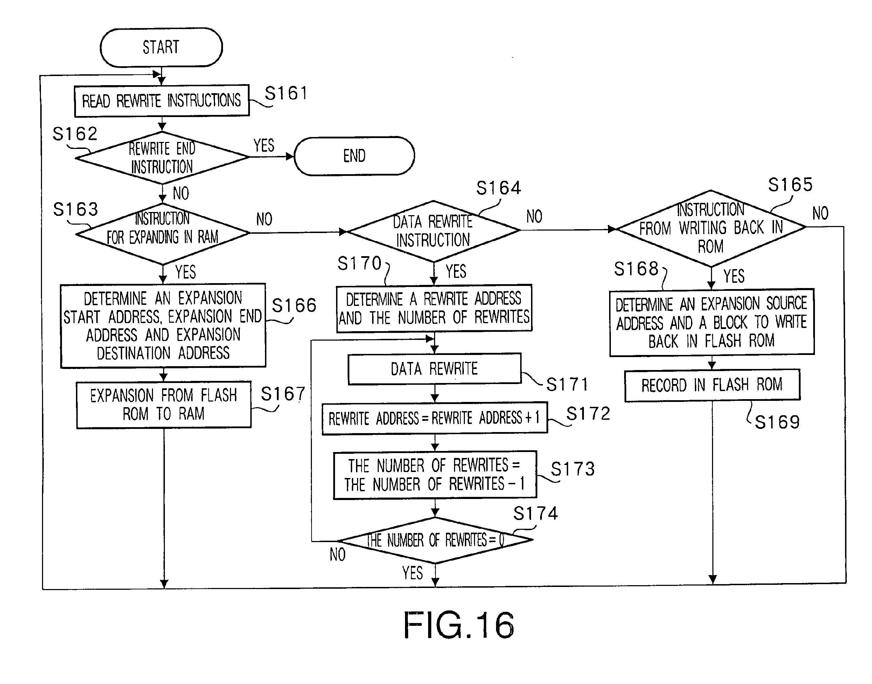

Under the assumption that the program in FIG.14A is stored in Flash ROM 13, a method will be described below of updating the program in FIG.14A to the program in FIG.14B in terminal apparatus 1. Herein, the operation when terminal apparatus 1 receives rewrite instructions as shown in FIG.15 is described with reference to a flowchart as shown in FIG.16.

In addition, when instruction 1501 in FIG.15 is one for expanding in RAM 14, data 1502 following instruction 1501 is start address 1503 of an expansion source, data following start address 1503 of the expansion source is end address 1504 of the expansion source, and data following end address 1504 of the expansion source is address 1505 of an expansion destination. Then, using the data, control CPU 12 expands data from Flash ROM 13 to RAM 14.

Thus, designation of data to expand is performed using address information, instead of using actual data. It is thereby possible to reduce a data amount of rewrite instructions and to shorten the update operation time of a program including data transfer time.

Write-back in ROM 13 is the same as the operation as described in the second embodiment of the present invention, while rewrite is the same as the operation as described in the fourth embodiment of the present invention.

In step S161, when instruction 1501 as shown in FIG. 15 is provided as rewrite instructions of the program stored in Flash ROM 13 through external connection interface 11, control CPU 12 reads instruction No.1

Next, in step S162, control CPU 12 checks whether the read instruction is a rewrite end instruction. When the instruction is not the rewrite end instruction, control CPU 12 shifts to processing of step S163.

In step S163, control CPU 12 checks whether the read instruction is an instruction for expanding in RAM 14. Since the instruction is the instruction for expanding in RAM 14, control CPU 12 shifts to processing of step S166. When the read instruction is not the instruction for expanding in RAM 14, control CPU shifts to processing of step S164.

Instruction No.1 in FIG.15 is the instruction for expanding in RAM 14. Accordingly, in step S166, control CPU 12 determines that the start address of the expansion source is 0x00000000 in Flash ROM 13, the end address of the expansion source is 0x000001FF, and the address of the expansion destination is 0x00110000 in RAM 14, from the data of instruction No.1.

Next, in step S167, control CPU 12 expands data from Flash ROM 13 to RAM 14 according to addresses determined in step S166.

In the case of instruction No.1 exemplified in FIG. 15, data at 0x00000000 to 0x000001FF in Flash ROM 13, i.e. Module A1401 in FIG.14A is expanded in 0x00110000 to 0x001101FF in RAM 14.

Next, control CPU 12 shifts to processing of step S161.

Instruction No.2 in FIG.15 is the instruction for expanding in the RAM that is the same as instruction No.1. Accordingly, in the same processing as in instruction No.1, control CPU 12 expands data from Flash ROM 13 to RAM 14.

By this means, Module C1403 in FIG.14A is expanded at 0x00110230 to 0x0011060F in RAM 14.

Next, in the case of instruction No.3 in FIG.15, control CPU 12 reads the instruction in step S161, and then shifts to processing of step S164 via the processing of steps S162 and S163.

In step S164, control CPU 12 checks whether the read instruction is a data rewrite instruction. When the read instruction is the data rewrite instruction, control CPU 12 shifts to processing of step S170. Meanwhile, when the read instruction is not the data rewrite instruction, control CPU 12 shifts to processing of step S165.

Instruction No.3 in FIG.15 is the data rewrite instruction. Therefore, control CPU 12 shifts to the processing of S170. In step S170, control CPU 12 determines that address 0x00110200 in RAM 14 is a rewrite start address, and that the number of rewrite data items is 0x30, from rewrite instruction No.3 in FIG.15.

Next, in step S171, control CPU 12 changes the content of address 0x00110200 based on rewrite data of instruction No.3 in FIG.15.

Then, in step S172, control CPU 12 increases the rewrite address by 1 to 0x00110201. Next, in step S173, control CPU 12 decreases the number of rewrite data items by 1 to 0x2F.

In step S174, control CPU 12 checks whether the number of rewrite data items is 0, and when the number is not 0, shifts to the processing of step S171.

Then, control CPU 12 repeats the processing of steps S171 to S174 as described above until the number of rewrite data items becomes 0. When the number of rewrite data items becomes 0, control CPU 12 shifts to the processing of S161.

On the assumption that successive data corresponding to 0x03 given by instruction No.3 is Module B'1403 in FIG.14B, when the number of rewrite data items is judged to be 0 in step S174, Module B'1404 is expanded at 0x00110200 to 0x0011022F in RAM 14.

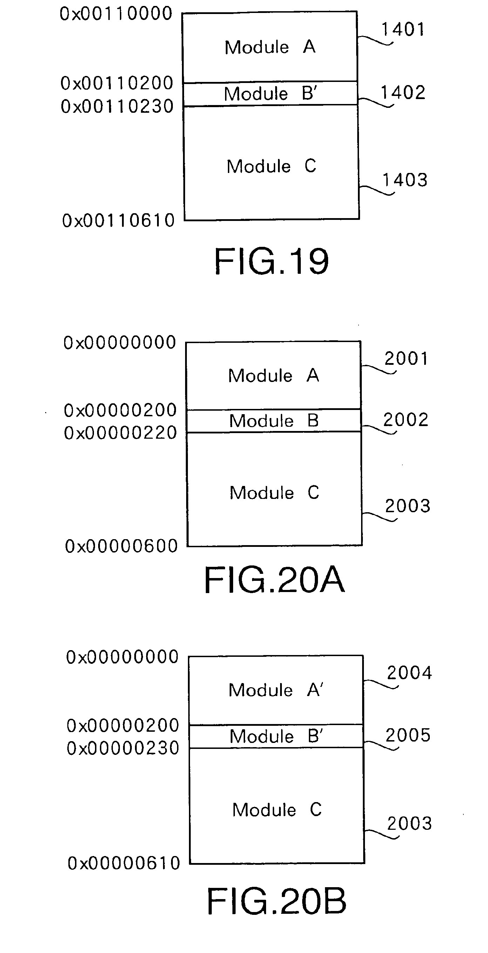

As described above, the program as shown in FIG.19 is expanded from address 0x00110000 in RAM 14.

It is noted that as Module B becomes Module B' due to update and increases in size, the position of Module C shifts rearward by a difference in size between Module B and Module B'. In other words, Module C is shifted when expanded in RAM 14 so as to increase a relative value between positions of Module B targeted for update and subsequent Module C stored in Flash ROM 13.

By this means, even when Module B becomes Module B' due to update and increases in size, it is possible to prevent overlapping of Module B' and Module C.

Further, it is thus possible to shift code (Module C) of a portion with no need of rewrite when an amount (Module B) of code (including immediate data) of the program of a rewrite portion, and it is thereby possible to rewrite the program without requiring information on subsequent code (Module C) of the rewritten portion (Module B'). Therefore, it is possible to reduce rewrite instructions transferred from the outside of terminal apparatus 1. In other words, it is possible to achieve a shift of Module C with a fewer data amount. As a result, it is possible to reduce the update operation time of a program including data transfer time.

Next, in the case of instruction No.4 in FIG.15, after reading the instruction in step S161, control CPU 12 shifts to the processing of step S165 via the processing of steps S162, S163 and S164.

In step S165, control CPU 112 judges that the read instruction is an instruction for writing back in ROM, and when the read instruction is the instruction for writing back in ROM, shifts to the processing of step S168.

When the read instruction is not the instruction for writing back in ROM, control CPU 12 shifts to the processing of step S161.

Instruction No.4 in FIG.15 is the instruction for writing back in ROM. Therefore, control CPU 12 shifts to processing of step S168.

In step S168, according to the instruction for writing back in the read ROM, control CPU 12 determines addresses 0x00110000 to 0x0011FFFF in which updated control software is stored in RAM 14, and a block to write back in Flash ROM 13, i.e. 0x00000000 to 0x0000FFFF in the case of instruction No.4 exemplified in FIG.15.

Next, in step S169, control CPU 12 deletes the block of 0x00000000 to 0x0000FFFF in Flash ROM 13 determined in step S168. Then, control CPU 12 records updated control software stored in 0x00110000 to 0x0011FFFF in RAM 14 in the deleted block in Flash ROM 13.

Control CPU 12 shifts to the processing of step S161.

Then, control CPU 12 repeats the aforementioned processing sequentially until an instruction read in step S161 is judged to be a rewrite end instruction in step S162.

As described above, according to the fifth embodiment, without downloading the entire corrected program as shown in FIG.14, it is possible to update the control software stored in Flash ROM 13 in the terminal. As a result, it is possible to achieve reduction in software update time due to reductions in rewrite instructions.

Further, according to the fifth embodiment, when the size of Module B increases due to update, it is possible to shift Module C in expanding in RAM 14 so as to increase a relative value between positions of Module B targeted for update and subsequent Module C stored in Flash ROM 13. Therefore, it is possible to reduce rewrite instructions transferred from the outside of the apparatus. As a result, it is possible to reduce the update operation time of a program including data transfer time.

In addition, while the fifth embodiment describes the case where the program is comprised of three modules, but the number of modules and the size of the module are not limited to the number of modules and the size as described above, respectively.

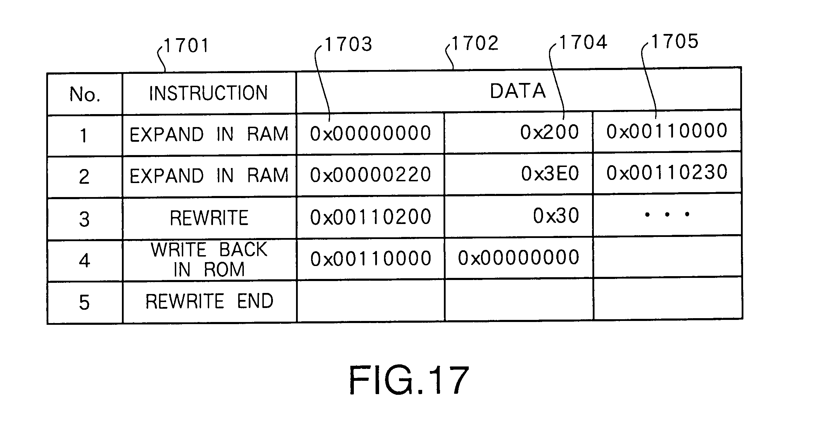

Further, while in FIG.15 "expansion in RAM" is comprised of a combination of head address 1503 and end address 1504 in Flash ROM 13 as an expansion source, and head address 1505 in RAM as an expansion destination, it is possible to obtain the same effects by combining, as shown in FIG.17, head address 1703 of the expansion source, the number of subsequent expanding data items 1704, and head address 1705 in RAM as an expansion destination.

Furthermore, in FIG.15, the area of RAM 14where the program in Flash ROM 13 is expanded is designated using absolute addresses. However, since the area of RAM 14 is only used as an operation area, control CPU 12 in terminal apparatus 1 may set any area in RAM 14.

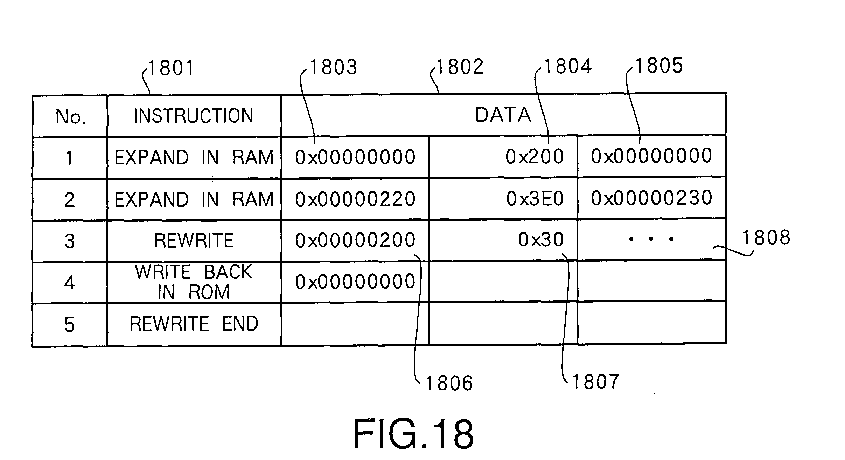

In this case, address designation in expanding in RAM 14 or rewriting in RAM 14 in instructions is performed using an offset value from a head address in an arbitrary area. In other words, in the rewrite instruction as shown in FIG.18, "expansion in RAM 14" is comprised of a combination of head address 1803 in Flash ROM 13 as an expansion source, the number of expanding data items 1804 and offset value 1805 from the head address in the arbitrary area.

For example, instruction No.2 indicates that successive data corresponding to 0x3E0 starting with address 0x00000220 in Flash ROM 13 is expanded in the head address plus 0x00000230 in the arbitrary area.

Further, "rewrite" is comprised of a combination of offset value 1806 with respect to the head address in the arbitrary area, the number of rewrite data items 1807 and actual rewrite data 1808 corresponding to the number of the data items. For example, in instruction No.3, data corresponding to 0x30 is rewritten starting with an address of the head address plus 0x00000200 in the arbitrary area.

An instruction for writing back in ROM 13 instructs to write back on a deleted block basis in Flash ROM 13. Therefore, the instruction only indicates the head of the block to write back. For example, in instruction No.4, 0x00000000 is instructed as a head of the block to write back, and after deleting the block 0x00000000 to 0x0000FFFF in the memory map as shown in FIG.2, the area from the head in the arbitrary area in RAM to the head in the arbitrary area plus 0x0000FFFF is written back in Flash ROM 13.

Further, the fifth embodiment describes the case where determination processing on the content of an instruction read in step S161 is executed in the order of steps S162, S163, S164 and S165, but it is possible to exchange the order of determination optionally.

Moreover, in the fifth embodiment, the rewrite address is increased by 1 in step S172, and then the number of rewrite data items is decreased by 1 in step S173. However, the same effects are obtained by first decreasing the number of rewrite data items by 1, and then increasing the rewrite address by 1.

### (Sixth embodiment)

FIGs.20A and 29B show module structures of a program in the sixth embodiment of the present invention, and FIG. 20A shows a structure before a bug is corrected, while FIG.20B shows a structure after the bug is corrected.

In other words, the program as shown in FIG.20A is comprised of three modules, Module A2001, Module B2002, and Module C2003. Module A is located at 0x00000000 to 0x000001FF, Module B is located at 0x00000200 to 0x0000021F, and Module C is located at 0x00000220 to 0x000005FF.

In the program as shown in FIG.20B, as a result of correcting the program as shown in FIG.20A, Module A2001 is changed.

Specifically, Module A2001 is located at 0x00000000 to 0x000001FF as Module A'2004. Module B2002 is changed and located at 0x00000200 to 0x0000022F as Module B'2005. Module C2003 is not changed in content, but shifted in location to 0x00000230 to 0x0000060F.

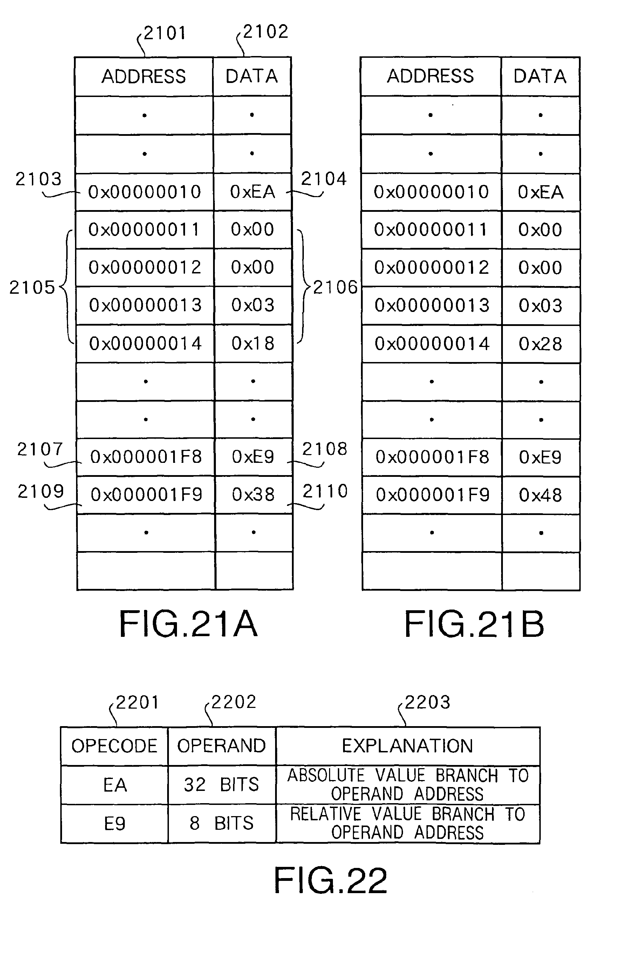

FIG.21A shows part of the content of Module A2001 with no bug corrected, and FIG.21B shows part of Module A' 2004 with the bug corrected.

FIG. 22 shows an example of branch commands of control CPU 12 in terminal apparatus 1 in the sixth embodiment.

Opecode 2201 is to branch operand 2202 following opecode 2201 as an address.

Specifically, opecode 0xEA is to branch operand 32 bits following the opecode as an absolute address. Further, opecode 0xE9 is to set 8 bits following the opecode as a relative value, and branch to an address indicated by the sum of the address stored in the opecode and the relative value.

In other words, as shown in FIG.21A, when data (2102) of address (2101) 0x00000010 (2103) is 0xEA (2104), the portion is a command by interpreting data (2106) stored in addresses 0x00000011 to 0x00000014 (2105) as a 32-bit address to branch to 0x00000318.

Further, as shown in FIG.21A, when the content of address 0x000001F8 (2107) is 0xE9 (2108), it is a command to set data 0x38 (2110) at address 0x000001F9 (2109) as a relative value, and branch to 0x00000230 that is the sum of 0x000001F8 and the relative value.

FIG. 21B shows the control program as shown inFIG.20B with a bug of the control program as shown in FIG.20A corrected.

Specifically, as shown in FIG. 20B, the size of Module B'2005 is larger than that of Module B2002 by 0x10 bytes. As a result, the location of Module C2003 following Module B2002 is shifted by 0x10 bytes. Accordingly, a branch destination of an absolute address branch command stored in 0x00000010 (2103) is changed to 0x00000328. Further, a branch destination of a relative address branch command stored in 0x000001F8 (2109) is changed to 0x00000240.

The terminal apparatus in the sixth embodiment will be described below. An example of a functional block of terminal apparatus 1 and an example of a memory map in the sixth embodiment of the present invention are the same as in the first embodiment, and as shown in FIGs.1 and 2, respectively. Further, it is assumed that 0x00110000 to 0x0011FFFF are used as the operation area in correcting the control program by control CPU 12.

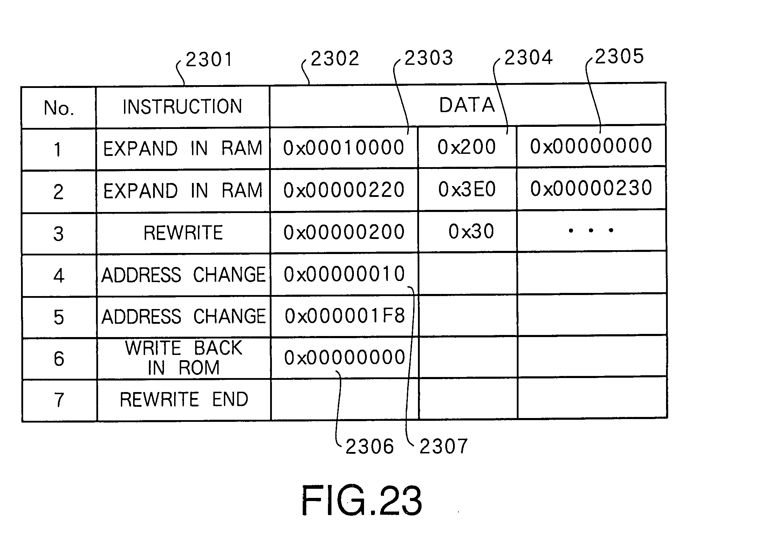

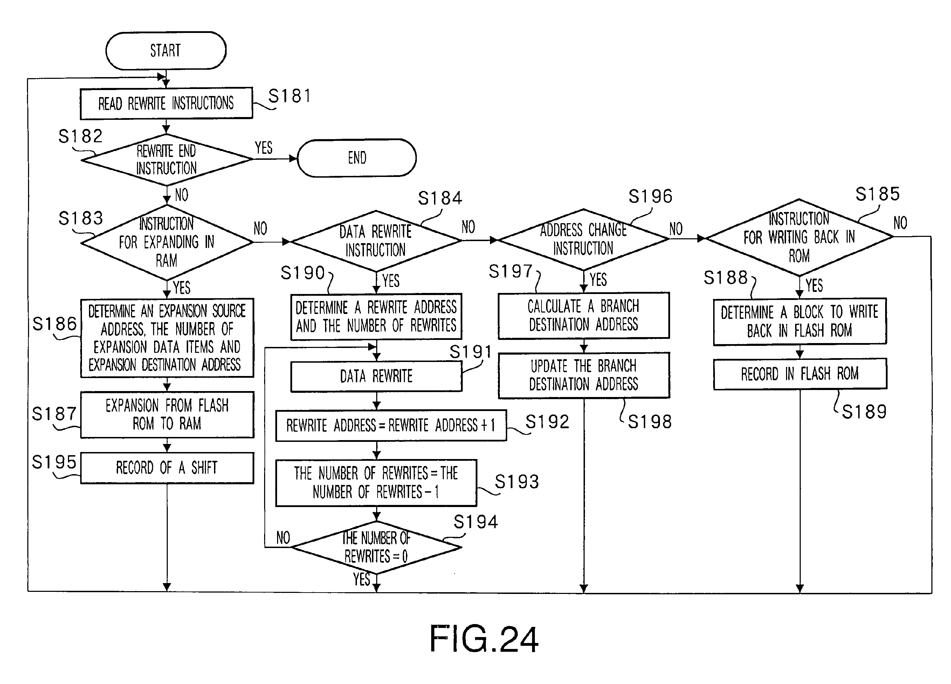

A method will be described below for terminal apparatus 1 to update the program as shown in FIG.20A to the program as shown in FIG.20B in the case where the program in FIG.20A is recorded in Flash ROM 13. Herein, the operation when rewrite instructions as shown in FIG. 23 are provided to terminal apparatus 1 will be described with reference to a flowchart as shown in FIG.24.

In addition, in the operation for each instruction in FIG.23, the rewrite is the same as in the fifth embodiment.

Further, in the case of expanding in RAM 14, data 2302 is present in a portion following instruction 2301 No.1. In data 2302 are disposed start address 2303 in an expansion source, the number of data items 2304 to expand subsequent to start address 2303 in the expansion source, and address 2305 in an expansion destination subsequent to the number of data items 2304 to expand.

Control CPU 12 expands data from Flash ROM 13 to RAM 14 using these pieces of information.

In the case of writing back in ROM 13, the head of data 2302 following instruction 2301 No.6 indicates head address 2306 of a block targeted for recording in Flash ROM 13. After deleting the block starting with head address 2306, data in the area optionally determined as the operation area in RAM 14 is recoded in the deleted block starting with head address 2306 in Flash ROM 13.

With respect to a change in address, a head portion of data 2302 following instruction No.4 is offset value 2307 from the head in the arbitrary area in RMA 14 where the program is expanded. It is indicated to interpret an opecode stored in an address indicated by the sum of the head address and offset value 2307, and update the operand corresponding to the interpreted opecode.

First, in step S181, when instructions as shown in FIG. 23 are provided as rewrite instructions of the program stored in Flash ROM 13 through external connection interface 11, control CPU 12 reads instruction No.1.

Next, in step S182, control CPU 12 checks whether the read instruction is a rewrite end instruction. When the instruction is not the rewrite end instruction, control CPU 12 shifts to processing of step S183.

In step S183, control CPU 12 checks whether the read instruction is an instruction for expanding in RAM 14. When the instruction is the instruction for expanding in RAM 14, control CPU 12 shifts to processing of step S186, while shifting to processing of step S184 when the read instruction is not the instruction for expanding in RAM 14.

Instruction No.1 in FIG.23 is the instruction for expanding in RAM 14. Accordingly, in step S186, based on data of instruction No.1, control CPU 12 determines that an address of the expansion source is 0x00000000 in Flash ROM 13, the number of data items to expand is 0x200 bytes, and an address of an expansion destination is 0x00110000 that is the sum of address 0x0011000 that is the head address of the former operation area in RAM 14 plus offset 0x00000000.

Next, in step S187, control CPU 12 expands data from Flash ROM 13 to RAM 14 according to the addresses and the number of data items determined in step S186.

In the case of instruction No.1 exemplified in FIG.23, data in 0x00000000 to 0x000001FF, i.e. Module A2001 in FIG.20A is expanded at 0x00110000 to 0x001101FF in RAM 14.

Then, in step S195, control CPU 12 records that a shift amount of the area from 0x00000000 to 0x000001FF in Flash ROM 13 is 0x00000000 in any area except the operation area of from 0x00110000 to 0x0011FFFF in RAM 14, and then shifts to processing of step S181.

Next, since instruction No.2 in FIG.23 is the instruction for expanding in the RAM as in instruction No.1, control CPU 12 executes the expansion processing of data from Flash ROM 13 to RAM 14 in the same way as in the aforementioned processing.

By this means, Module C2003 in FIG.20A is expanded at 0x00110230 to 0x0011060F in RAM 14.

Further, as in the processing as described above, in step S195, control CPU 12 records that a shift amount of the area from 0x00000220 to 0x000005FF in Flash ROM 13 is 0x00000010.

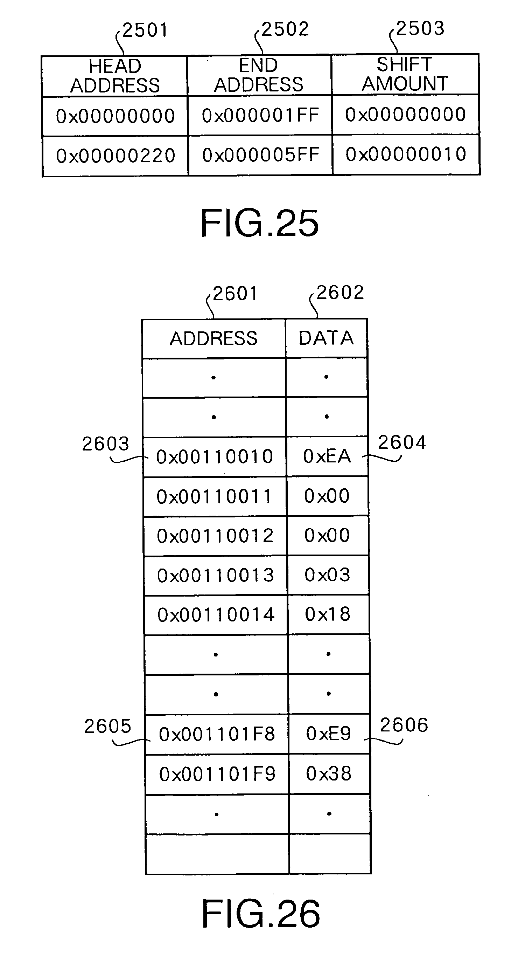

By the aforementioned processing, records are obtained of head address 2501 and end address 2502 of the shift area and shift amount 2503 of the area as shown in FIG.25.

Head address 2501 and end address 2502 of the shift area are actually the head address and end address of the shift area. The need is thus eliminated of describing the shift area with actual data, and it is thereby possible to reduce a data amount.

Then, in the case of instruction No.3 in FIG.23, control CPU 12 reads the instruction in step S181, and shifts to processing of step S184 via the processing of steps S182 and S183.

In step S184, control CPU 12 checks whether the read instruction is a data rewrite instruction. When the read instruction is the data rewrite instruction, control CPU 12 shifts to processing of step S190, while shifting to processing of step S196 when the read instruction is not the data rewrite instruction.

Instruction No.3 in FIG.23 is the data rewrite instruction. Accordingly, control CPU 12 shifts to the processing of S190.

In step S190, control CPU 12 determines that address 0x00110200 obtained by adding offset 0x00000200 to head address 0x00110000 of the operation area in RAM 14 is a rewrite start address, and that the number of rewrite data items is 0x30, from rewrite instruction No.3 in FIG.23.

Next, in step S191, control CPU 12 changes the content of address 0x001102000 based on rewrite data of instruction No.3 in FIG.23.

Then, in step S192, control CPU 12 increases the rewrite address by 1 to 0x00110201.

In step S193, control CPU 12 decreases the number of rewrite data items by 1 to 0x2F.

In step S194, control CPU 12 checks whether the number of rewrite data items is 0, and when the number is not 0, shifts to the processing of step S191.

Then, control CPU 12 repeats the processing of steps S191 to S194 as described above until the number of rewrite data items becomes 0.

When the number of rewrite data items becomes 0, control CPU 12 shifts to the processing of S181.

Herein, assuming that successive data corresponding to 0x30 given by instruction No.3 is Module B'2005 in FIG.20B, when it is judged in step S194 that the number of rewrite data items becomes 0, Module B'2005 is expanded at 0x00110200 to 0x0011022F in RAM 14.

By the aforementioned processing, the program as shown in FIG.19 is expanded starting with address 0x00110000 in RAM 14.

FIG.26 shows the state of RAM 14 at this point. addresses (2601) 0x00110010 (2603) and 0x001101F8 (2605) respectively have peripheral data (2602), 0xEA (2604) and 0xE9 (2606).

Then, in the case of instruction No.4 in FIG.23, control CPU 12 reads the instruction step S181, and shifts to processing of S196 via the processing of steps S182, S183 and S184.

In step S196, control CPU 12 checks whether the read instruction is an address change instruction. When the read instruction is the address change instruction, control CPU 12 shifts to processing of S197. When the read instruction is not the address change instruction, control CPU 12 shifts to the processing of S185.

Instruction No.4 in FIG.23 is the address change instruction. Accordingly, control CPU 12 shifts to the processing of S197.

In step S197, control CPU 12 judges that offset value 0x00000010 (2307) indicated by the read address change instruction is an address change instruction for address 0x00110010 that is added to head address 0x00110000 of the operation area in RAM 14.

Further, control CPU 12 interprets that opecode 0xEA (2604) stored in address 0x00110010 (2603) as shown in FIG.26 is a branch command to address 0x00000318, from the opecode shown in FIG.22 and 4-byte operand following 0x00110010 .

Furthermore, control CPU 12 recognizes that block 0x00000220 to 0x000005FF that includes 0x00000318 has shift amount 0x00000010, from the record of the information on the shift of the module as shown in FIG.25. Accordingly, control CPU 12 calculates a branch destination address in the corrected program is 0x00000328 obtained by adding shift amount 0x0000010 to non-corrected branch destination address 0x00000318.

Then, in step S198, control CPU 12 updates 4-byte operand following opecode (data) (2702) 0xEA (2704) of address (2701) 0x00110010 (2703) to 0x00000328.

Control CPU 12 shifts to the processing of S181.

Also in instruction No.5 in FIG.23, control CPU 12 reads the instruction in step S181, and shifts to processing of S197 via the processing of steps S182, S183, S184 and S196.

In step S197, control CPU 12 judges that offset value 0x000001F8 indicated by the read address change instruction is an address change instruction for address 0x001101F8 that is added to head address 0x00110000 of the operation area in RAM 14.

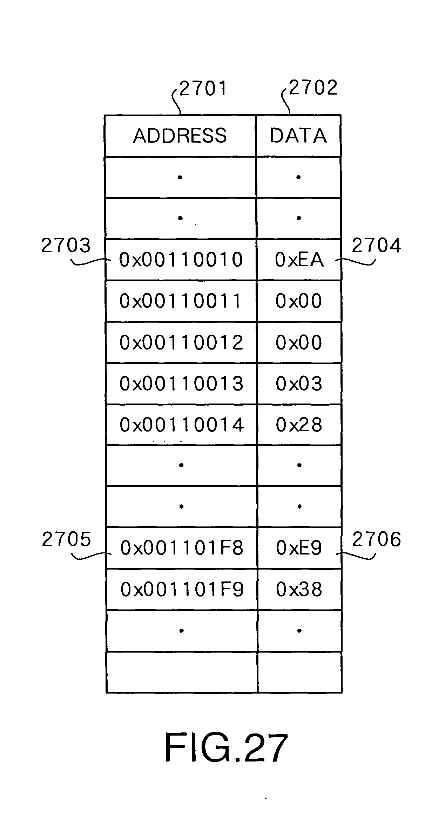

For example, control CPU 12 interprets that opecode (2702) 0xE9 (2706) stored in address (2701) 0x001101F8 (2705) in FIG.27 is a branch command to address 0x00000230 obtained by adding 0x38 to 0x000001F8, from the opecode shown in FIG.22 and 1-byte operand following 0x001101F8. Further, control CPU 12 recognizes that block 0x00000220 to 0x000005FF that includes 0x00000230 has shift amount 0x00000010, from the record of the shift as shown in FIG.25.

Accordingly, control CPU 12 is capable of judging that a branch destination address in the corrected program is 0x00000240 obtained by adding shift amount 0x0000010 to non-corrected branch address 0x00000230, and calculates that a relative address from 0x00001F8 where the opecode exists is 0x48.

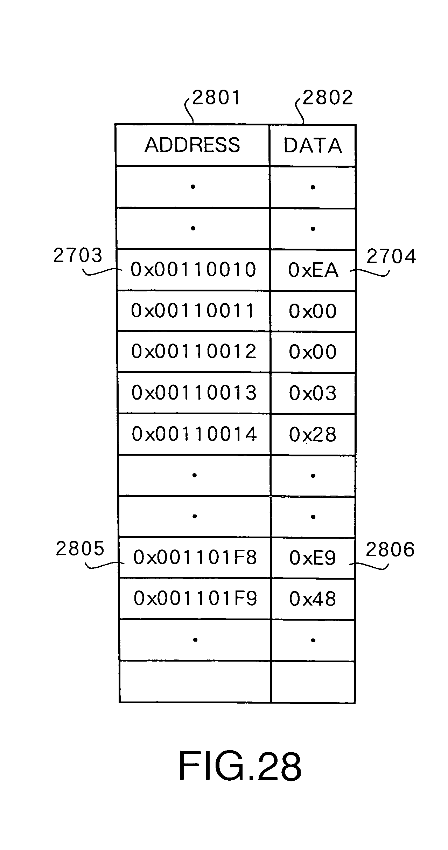

Then, in step S198, control CPU 121 updates 1-byte operand following opecode (data) (2802) 0xE9 (2806) of address (2801) 0x001101F8 (2805) shown in FIG.28 to 0x48, according to the branch destination address determined in step S197.

Thus, when the operand used by opecode shifts due to a change in size of Module B, control CPU 12 is capable of correcting the operand automatically based on the record of the information on the shift of Module shown in FIG.25. Accordingly, it is not necessary to instruct the content of correction of the operand from the outside, and it is thus possible to reduce a data amount of instructions.

Next, control CPU12 shifts to processing of S181.

Next, in the case of instruction No.6 in FIG.23, control CPU 12 reads the instruction in step S181, and shifts to processing of S185 via the processing of steps S182, S183, S184 and S196.

In step S185, control CPU 112 checks whether the read instruction is an instruction for writing back in ROM, and when the read instruction is the instruction for writing back in ROM 13, shifts to the processing of step S188, while shifting to the processing of step S181 when the read instruction is not the instruction for writing back in ROM 13.

Instruction No.6 in FIG.23 is the instruction for writing back in ROM 13. Therefore, control CPU 12 shifts to processing of step S188.

In step S188, control CPU 12 determines a block in Flash ROM 13 indicated by the read instruction for writing back in ROM 13. For example, in the case of instruction No.6 exemplified in FIG.23, control CPU 12 determines addresses 0x00000000 to 0x0000FFFF as such a block.

Next, in step S189, control CPU 12 deletes the block at 0x00000000 to 0x0000FFFF in Flash ROM 13 determined in step S188. Then, control CPU 12 records updated control software stored in the operation area of 0x00110000 to 0x0011FFFF in RAM 14 in the deleted block in Flash ROM 13.

Control CPU 12 shifts to processing of step S181.

Then, control CPU 12 repeats the aforementioned processing until an instruction read in step S181 is judged to be a rewrite end instruction in step S182.

As described above, according to the sixth embodiment, without downloading the entire corrected program as shown in FIG.20B, it is possible to update the control software stored in Flash ROM 13 in the terminal.

In addition, while the sixth embodiment describes the case where the program is comprised of three modules, but the number of modules and the size of the module are not limited to the number of modules and the size as described above, respectively.

While FIG.22 is shown in the sixth embodiment as an example of opecode of a branch command, the same effects maybe obtained using opecode different from that in FIG. 22 depending on the type of control CPU 12 used in terminal apparatus 1.

Further, the sixth embodiment describes the case where operands of an absolute-value branch and relative-value branch are corrected using the record of the information on the shift of the module as shown in FIG.25. However, it may be possible to apply to a function call command, as well as the branch command.

Furthermore, according to the sixth embodiment, when a branch command and function call command each with a relative address designated are used and exceed a range of address usable in relative address designation branch command, the need is eliminated of downloading, through the external interface, data for instructing conversion from the relative address designation branch command or relative address designation function call command relatively into an absolute address designation branch command or absolute address designation function call command to change to the updated program. It is thereby possible to reduce a data amount instructed through the external interface. As a result, it is possible to reduce the update operation time of the program including data transfer time.

Further, in the case of a configuration provided with a lookup table comprised of events such as alert and key press and presence addresses of processing modules for the invents, it may be possible to correct a presence address of the processing module in the lookup table using the record of the information on the shift of the module as shown in FIG.25.

In the case of correction of the lookup table, it may be possible to instruct a location of the lookup table from the outside or beforehand embed the location in terminal apparatus 1. When the location of the lookup table is embedded, the lookup table can be corrected automatically without instructions from the outside.

Further, in the sixth embodiment, an instruction is made for changing an address in which is stored a command using the address (operand) such as an absolute value branch and relative value branch. However, control CPU 12 may automatically judge whether a command such as an absolute value branch or relative value branch is present at an address in receiving an instruction simply indicative of the address, and when the command is present, correct an operand using the record of the information on the shift of the module as shown in FIG.25.

It is thereby possible to omit instructions from the outside. Further, without knowing that a command such as an absolute value branch or relative value branch is stored, it is possible to automatically correct an operand used in the command.

Furthermore, it may be possible to extract a branch (function call) command by disassembling the program from the beginning, and correct an address used in the command. It is thereby possible to reduce instructions from the outside.

In this case, when program and data portions are combined with complexity, since it is difficult to separate the program portion, it may be possible to designate the programportion in advance from the outside, disassemble only the designated portion, and recalculate the address.

By this means, the need is eliminated of designating a location of a branch (function call) command from the outside, and it is thus possible to reduce instructions from the outside.

Further, the sixth embodiment describes the case where determination processing on the content of an instruction read in step S181 is executed in the order of steps S182, S183, S184, S196andS185, but it is possible to exchange the order of determination optionally.

Furthermore, in the sixth embodiment, the rewrite address is increased by 1 in step S192, and then the number of rewrite data items is decreased by 1 in step S193. However, the same effects are obtained by first decreasing the number of rewrite data items by 1, and then increasing the rewrite address by 1.

Still furthermore, in the sixth embodiment, after determining an address of an expansion source, the number of data items to expand, and an address of an expansion destination in step S186, data is expanded from Flash ROM 13 to RAM 14 in step S189, and the shift is recorded in step S195. However, the same effects are obtained by first recording the shift and then expanding data from Flash ROM 13 to RAM 14.

This application is based on the Japanese Patent Applications No.2002-294499 filed on October 8, 2002, and No.2003-347561 filed on October 6, 2003, entire contents of which are expressly incorporated by reference herein.

### Industrial Applicability

According to the present invention, in updating software stored in nonvolatile memory in a terminal to correct, it is possible to correct the software without downloading all the corrected software to the terminal, and there is an advantage that the software in the terminal can be updated efficiently.

## Claims

1. A program update method, comprising:
expanding a program portion in a block storing an update target portion of a program in RAM in updating the program stored in rewritable nonvolatile memory comprised of a plurality of blocks including the block;
updating only the update target portion of the program portion expanded in the RAM, according to a rewrite instruction instructed through an external interface; and
collectively writing back the updated program portion in the nonvolatile memory.

2. The program update method according to claim 1, wherein when the update target portion increases in size due to an update, the rewrite instruction is an instruction for shifting a subsequent portion in expanding in the RAM so as to increase a relative positional relationship between the update target portion and the subsequent portion to the update target portion stored in the nonvolatile memory.

3. The program update method according to claim 2, wherein the rewrite instruction includes address information to specify the subsequent portion and a head address to expand the subsequent portion in the RAM.

4. The program update method according to claim 3, wherein the address information to specify the subsequent portion includes a head address of the subsequent portion in the nonvolatile memory or in the RAM and the number of data items.

5. The program update method according to claim 3, wherein the address information to specify the subsequent portion includes a head address and an end address of the subsequent portion in the nonvolatile memory or in the RAM.

6. The program update method according to claim 2, wherein information on a shift of the subsequent portion in the RAM is recorded in another area different from an area where the program is expanded in the RAM, and when an address of the nonvolatile memory or the RAM is instructed by the rewrite instruction, an absolute address value stored in the address instructed is corrected according to the information on the shift.

7. The program update method according to claim 6, wherein the information on the shift includes address information to specify a location of the subsequent portion, and a head address to expand the subsequent portion in the RAM.

8. The program update method according to claim 7, wherein the address information to specify the subsequent portion includes a head address of the subsequent portion in the nonvolatile memory or in the RAM and the number of data items, or the head address and an end address of the subsequent portion in the nonvolatile memory or in the RAM.

9. The program update method according to claim 7, wherein the head address to expand the subsequent portion in the RAM is a relative address from the head address of the subsequent portion in the nonvolatile portion or in the RAM.

10. The program update method according to claim 6, wherein the rewrite instruction instructs an address in the nonvolatile memory or in the RAM, and an absolute address value used by an absolute address designation branch command stored in the address instructed is corrected according to the information on the shift.

11. The program update method according to claim 6, wherein the rewrite instruction instructs an address in the nonvolatile memory or in the RAM, and an absolute address value used by an absolute address designation function call command stored in the address instructed is corrected according to the information on the shift.

12. The program update method according to claim 6, wherein the rewrite instruction instructs an address in the nonvolatile memory or in the RAM, and a relative address value stored in the address instructed is corrected according to the information on the shift.

13. The program update method according to claim 6, wherein the rewrite instruction instructs an address in the nonvolatile memory or in the RAM, and a relative address value used by a relative address designation branch command stored in the address instructed is corrected according to the information on the shift.

14. The program update method according to claim 6, wherein the rewrite instruction instructs an address in the nonvolatile memory or in the RAM, and a relative address value used by a relative address designation function call command stored in the address instructed is corrected according to the information on the shift.

15. The program update method according to claim 12, wherein in correcting the relative address value of the program according to the information on the shift, the relative address value is converted into an absolute address value when the relative value corrected exceeds a range allowing relative address designation.

16. The program update method according to claim 13, wherein in correcting a relative address value of the program according to the information on the shift and converting the relative address value corrected into an absolute address value, the relative address designation branch command using the relative address value that is not corrected is converted into an absolute address designation branch command.

17. The program update method according to claim 14, wherein in correcting a relative address value of the program according to the information on the shift and converting the relative address value corrected into an absolute address value, the relative address designation function call command using the relative address value that is not corrected is converted into an absolute address designation function call command.

18. The program update method according to claim 1, wherein the rewrite instruction includes a start address of the program portion in the nonvolatile memory or expanded in the RAM, the number of data items to rewrite and successive actual rewrite data.

19. The program update method according to claim 1, wherein the rewrite instruction includes a start address of the program portion in the nonvolatile memory or expanded in the RAM, successive actual rewrite data, and specific data indicative of a rewrite stop.

20. The program update method according to claim 3, wherein in address designation in the rewrite instruction, first address designation is made using an absolute value, and subsequent address designation is made using a relative address from an address designated immediately before.

21. The program update method according to claim 3, wherein in address designation in the rewrite instruction, first address designation is made using an absolute value, and subsequent address designation is made using a relative address from an address at the time of finishing successive rewrite processing from the address designated.

22. The program update method according to claim 3, wherein in address designation in the rewrite instruction, first address designation is made using a beforehand determined address as a reference, and subsequent designation is relative address designation using an address designated immediately before as a reference.

23. The program update method according to claim 3, wherein in address designation in the rewrite instruction, first address designation is made using an absolute value, and subsequent address designation is made using a beforehand determined address as a reference, and subsequent designation is relative address designation from an address at the time of finishing successive rewrite processing from the address designated.

24. A terminal apparatus comprising:
rewritable nonvolatile memory storing a program in a plurality of blocks;
RAM;
an external interface that receives a rewrite instruction on the program; and
a controller which expands a program portion in at least one of the blocks storing an update target portion of the program, updates only the update target portion of the program portion expanded in the RAM according to the rewrite instruction, and collectively writes back the program portion updated in the nonvolatile memory.

25. The terminal apparatus according to claim 24, wherein the external interface is a wired connection interface.

26. The terminal apparatus according to claim 24, wherein the external interface is a wireless connection interface.

27. The terminal apparatus according to claim 24, wherein the external interface is a memory card interface, and the controller reads out the rewrite instruction from a memory card inserted into the memory card interface.
